(19) Europäisches Patentamt
European Patent Office
Office européen des brevets

(11) Veröffentlichungsnummer: **0 029 947**
**B1**

(12) # EUROPÄISCHE PATENTSCHRIFT

(45) Veröffentlichungstag der Patentschrift: **09.01.85**

(51) Int. Cl.$^4$: **C 08 F 283/12,** C 08 F 283/06

(21) Anmeldenummer: **80107095.4**

(22) Anmeldetag: **15.11.80**

(54) **Pfropfpolymerisat-Dispersionen, ihre Herstellung und Verwendung.**

(30) Priorität: **28.11.79 DE 2947963**

(43) Veröffentlichungstag der Anmeldung:
**10.06.81 Patentblatt 81/23**

(45) Bekanntmachung des Hinweises auf die Patenterteilung:
**09.01.85 Patentblatt 85/02**

(84) Benannte Vertragsstaaten:
**BE DE FR GB IT NL**

(56) Entgegenhaltungen:
**DE-B-1 132 717**
**GB-A- 801 529**
**US-A-3 075 941**
**US-A-3 488 304**

(73) Patentinhaber: **BAYER AG**
**Konzernverwaltung RP Patentabteilung**
**D-5090 Leverkusen 1 Bayerwerk (DE)**

(72) Erfinder: **Alberts, Heinrich, Dr.**
**Morgengraben 16**
**D-5000 Koeln 80 (DE)**
Erfinder: **Friemann, Hans, Dr.**
**Silesiusstrasse 82**
**D-5000 Koeln 80 (DE)**
Erfinder: **Moretto, Hans-Heinrich, Dr.**
**Formesstrasse 13**
**D-5000 Koeln 80 (DE)**
Erfinder: **Sattlegger, Hans, Dr.**
**Auf dem Heidchen 9**
**D-5068 Odenthal (DE)**

**EP 0 029 947 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft bei Raumtemperatur härtbare, stabile Copfropfpolymerisatdispersionen aus endständig OH-funktionellen Organopolysiloxanen und gegebenenfalls weiteren Polydiorganosiloxanen, Polyethern sowie Vinylpolymeren, ein Verfahren zu ihrer Herstellung und die Verwendung dieser Copfropfpolymerisatdispersionen.

Bei Raumtemperatur härtende Polymersysteme auf Basis von Organopolysiloxanen sind bekannt (vergl. W. Noll, Chemie und Technologie der Silikone, Verlag Chemie GmbH., 1968, S. 391 ff).

Ferner ist die Herstellung von modifizierten Organopolysiloxanen nach verschiedenen Arbeitsweisen möglich und bekannt. Pfropfpolymere aus Organosiloxanen und Vinylpolymeren sind beispielsweise in den Patentschriften GB-PS 766 528, GB-PS 806 582, GB-PS 869 482 und DE-AS 1 694 973 beschrieben. In der DE-AS 1 694 973 wird die Anwendung von Organopolysiloxanen mit aufgepfropfter organischer Kette und maximal 25% Arylresten in bei Raumtemperatur härtenden 1- oder 2-Kompenonentenmassen beschrieben. Es wird ausgeführt, daß die erfindungsgemäß eingesetzten Hydroxypolysiloxane in jedem Fall bis zu maximal 25% Arylreste enthalten.

Ferner wird ausgeführt, daß die aufgepfropfte organische Kette durch polymerisierte Einheiten von Vinylmonomeren, bevorzugt Styrol und Acrylester, gebildet wird.

Neben den durch Pfropfung modifizierten Organopolysiloxanen sind auch Systeme bekannt, in denen ein ungesättigter Polyester mit einem funktionellen Organopolysiloxan cokondensiert wird. Das erhaltene Cokondensat wird in einem Vinylmonomeren gelöst und das System radikalisch ausgehärtet. In GB-PS 801 529 werden z.B. ausgehärtete Harze beschrieben, die zu 25—75 Gew.-% aus einem ungesättigten Polyester, 25—75 Gew.% Vinylpolymerisat und 0,5—30 Gew.% einer Siloxan-Komponente bestehen. Derartige, während der Vinylpolymerisation durch die Vernetzungsreaktion mit dem ungesättigten Polyester-Organosiloxan-Cokondensat aushärtende, vernetzte und unlösliche Formkörper bildende Massen, sind für die Herstellung von bei Raumtemperatur härtenden Organosiloxanmassen nicht geeignet.

Aus der US-Patentschrift 3.075.941 sind Copolymere aus Vinylpolymeren, Polyestern und Polysiloxanen bekannt. Bei diesen "klassischen" Copolymeren, die hauptsächlich als Überzüge verwendet werden, sind jedoch keine OH-funktionellen Siloxane vorhanden. Für die Anwendung als Polymermaterial im Gebiet der Dichtungsmassen sind derartige Copolymere nicht geeignet.

Aliphatische Polyether sind wichtige technische Ausgangsprodukte für z.B. Polyurethane und Elastomere. Mischungen aus derartigen Polyethern und Organopolysiloxanen sind instabil und nicht lagerfähig, da nach der erfolgten Vermischung in kurzer Zeit eine Trennung der unverträglichen Phasen erfolgt.

Polyurethan-Schaumstoffe, -Thermoplaste und Elastomere, die Polyether-Bausteine enthalten, sind hochwertige Chemiewerkstoffe. Durch die eingebauten Polyethersegmente werden hohe Elastizität und Flexibilität auch bei tiefen Temperaturen gewährleistet. Obwohl es wünschenswert wäre, die ausgezeichneten anwendungstechnischen Eigenschaften der Polyetherbausteine auch zur Herstellung neuartiger Organopolysiloxanelastomerer auszunutzen, gelang dies bis beute nicht. Ferner bestand der Wunsch, hochwirksame.

Weichmacher für Organopolysiloxanelastomere auf Polyetherbasis zur Verfügung zu stellen.

Aufgabe der Erfindung war es daher, phasenstabile und verträgliche Mehrphasensysteme aus Organopolysiloxanen und Polyethern zur Verfügung zu stellen.

Die Aufgabe wurde dadurch gelöst, daß Mischungen aus Organopolysiloxanen, Polyethern und Vinylmonomeren einer radikalischen Polymerisation unterzogen werden. Man erhält stabile Dispersionen, die aus einer Polyetherkomponente, einem Organopolysiloxan und polymerisierten Einheiten eines oder mehrerer Vinylmonomerer bestehen und die dadurch gekennzeichnet sind, daß sie über polymerisierte Einheiten der eingesetzten Vinylmonomeren querverbrückte Pfropfpolymere aus Organopolysiloxan und dem eingesetzten Polyether enthalten.

Somit sind Gegenstand der Erfindung bei Raumtemperatur härtbare, stabile Copfropfpolymerisatdispersionen, erhältlich durch Pfropfpolymerisation von Vinylmonomeren in Gegenwart von Mischungen aus Erst- und Zweitpolymeren, wobei als Erstpolymer OH-funktionelle Diorganopolysiloxane der Formel

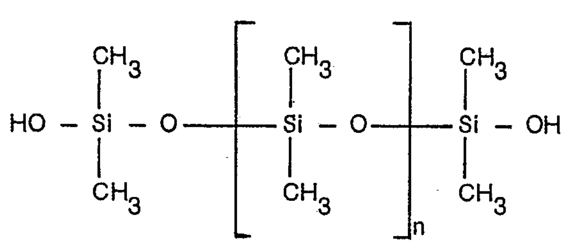

$n = 10$ bis $5000$

wobei die Methylgruppen bis zu 30 Mol.-% durch Ethyl-, Vinyl- oder Phenylgruppen ersetzt sein können und als Zweitpolymere gegebenenfalls durch Vinylpolymerisate modifizierte, aliphatische Polyether oder Polythioether mit 2—8 OH-Gruppen pro Molekül, wobei die Polyether vor, während oder nach der Polymerisation acyliert oder durch Umsetzung mit Mono- oder Polyisocyanaten urethanisiert werden können, eingesetzt werden und wobei Copfropfpolymerisatdispersionen erhalten werden, die über Vinylpolymerisatbrücken verknüpfte Pfropfpolymere aus Erst- und Zweitpolymeren enthalten und die aus

I 10—90 Gew.-% endständig OH-funktionellen Organopolysiloxanen,
II. 5—85 Gew.-% gegebenenfalls acylierte oder durch Umsetzung mit Mono- oder Polyisocyanaten urethanisierte Polyether und
III. 5—85 Gew.-% polymerisierten Einheiten aus Vinylverbindungen bestehen und wobei die Summe der Komponente I—III stets 100% beträgt.

Ferner sind Gegenstand der Erfindung Copfropfpolymerisatdispersionen, bei denen die Komponente III aus

5—85 Gew.% polymerisierten Einheiten aus Vinylestern, $\alpha,\beta$-ungesättigten Carbonsäuren, Derivaten, $\beta$-ungesättigter Mono- oder Dicarbonsäuren, Vinylaromaten wie Styrol, $\alpha$-Methylstyrol oder 4-Chlorstyrol, $\alpha$-Olefinen wie Ethylen, Propylen, Buten-1 oder Isobutylen, halogenierten Vinylmonomeren wie Vinylchlorid, Vinylidenchlorid, Vinylfluorid, Vinylidendluorid, Tetrafluorethylen, Trifluorchlorethylen, Vinylether wie Ethylvinylether, n-Butylvinylether, Allylverbindungen wie Allylalkohol, Allylacetate, Allylcarbonate, Diallylcarbonate, Diallylphthalat, Divinylverbindungen wie Divinylbenzol, Divinylether oder (Meth)Acrylsäureestern mehrwertiger Alkohole, oder Gemische dieser Monomeren, besteht.

Gegenstand der Erfindung sind ferner Copfropfpolymerisatdispersionen, bei denen die Komponente III aus

0—85 Gew.-% polymerisierten Einheiten aus Vinylacetat und
5—85 Gew.-% polymerisierten Einheiten aus (Meth)Acrylsäurealkylestern mit 1—8 C-Atomen in der Esteralkylkomponente, (Meth)Acrylsäureamid, N-Alkylsubstituierte (Meth)Acrylsäureamide, (Meth)Acrylnitril sowie ihren Gemischen besteht.

Gegenstand der Erfindung sind ferner Copfropfpolymerisatdispersionen, wobei die Komponente I
30—80 Gew.-%,
die Komponente II
10—60 Gew.-% ausmachen und
die Komponente III aus
10—60 Gew.-% polymerisierten Einheiten aus

a) 5—90 Gew.-% Styrol,
b) 10—95 Gew.-% (Meth)Acrylsäurealkylestern mit 1—8 C-Atomen in der Esteralkylkomponente
c) 0—85 Gew.-% (Meth)Acrylnitril, wobei die

Summe der Komponenten a)—c) stets 100% beträgt.

Vorzugsweise bestehen die erfindungsgemäßen Copfropfpolymerisatdispersionen zu 10—60 Gew.-% polymerisierten Einheiten aus Vinylacetate.

Ferner sind bevorzugter Gegenstand der Erfindung Copfropfpolymerisatdispersionen bestehend aus

5—60 Gew.-% endständig OH-funktionellen Organopolysiloxanen,
0—30 Gew.-% Organopolysiloxanen mit Trimethylsilylendgruppen, und
5—60 Gew.-% polymerisierten Einheiten aus Vinylmonomeren.

Ferner ist Gegenstand der Erfindung ein Verfahren zur Herstellung von Copfropfpolymerisatdispersionen, dadurch gekennzeichnet, daß Mischungen aus

a) 8—90 Gew.-% endständig OH-funktionellen Organopolysiloxanen,
b) 0—40 Gew.-% methyl-endgestoppten Organopolysiloxanen
c) 4,999—85 Gew.-% aliphatischen Polyethern
d) 5—85 Gew.-% eines oder mehrerer Vinylmonomerer,
e) 0,001—2 Gew.-% eines oder mehrerer Radikalbildner,

wobei die Summe der Komponenten a)—e) stets 100% beträgt, bei Temperaturen zwischen Raumtemperatur und 250°C einer Polymerisationsreaktion unterzogen werden.

Desweiteren sind Gegenstand der Erfindung bei Raumtemperatur vernetzbare Organopolysiloxanmassen, die Copfropfpolymerisatdispersionen und zusätzlich Vernetzer, Härtungskatalysatoren, Füllstoffe und gegebenenfalls weitere Zuschlagstoffe enthalten.

Ferner ist ein Gegenstand der Erfindung die Verwendung von bei Raumtemperatur vernetzbaren Organopolysiloxanmassen, die die erfindungsgemäßen Copfropfpolymerisatdispersionen enthalten, als Ein- oder Zweikomponentensysteme für Dichtungsmassen.

Die Herstellung der Copfropfpolymerisatdispersionen geschieht in der Weise, daß Mischungen aus einem endständig OH-funktionellen Organopolysiloxan, einem aliphatischen Polyether und gegenenfalls Polyester und einem oder mehrerer Vinylmonomerer in Gegenwart eines Radikalbildners auf eine, die Polymerisation auslösende, Reaktionstemperatur gebracht werden. Falls gewünscht, können auch Mischungen aus endständig OH-funktionellen und nicht funktionellen Organopolysiloxanen in die Reaktionsmischung eingetragen werden. Die Polymerisation kann nach kontinuierlichem oder diskontinuierlichem Verfahren durchgeführt werden. Im Prinzip ist die Reihenfolge der Zugabe der zur Reaktion zu bringenden Komponenten beliebig, die besten Resultate werden aber erzielt, wenn Mischungen aus Siloxan- und Polyetherkomponente und Vinylmonomeren gleichzeitig bei der Durchführung der Polymerisationsreaktion eingesetzt werden.

Die endständig OH-funktionellen Organopolysiloxane sind im wesentlichen linear und werden durch die folgende Formel dargestellt:

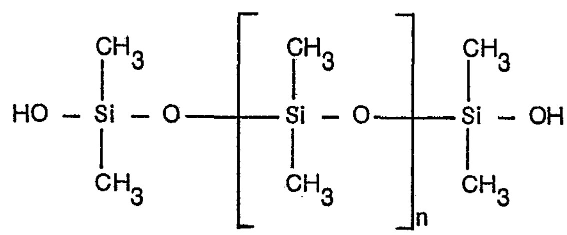

n = 10 bis 5000

Neben Methylgruppen können bis 30 Mol-% Ethyl-, Vinyl- und Phenylgruppen in den Organopolysiloxankomponenten enthalten sein, bevorzugt werden aber methylsubstituierte Organopolysiloxane eingesetzt.

Die für die Copfropfpolymerisation eingesetzten aliphatischen Polyether weisen zwei bis acht, vorzugsweise zwei bis drei, Hydroxylgruppen auf und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole oder Amine, Wasser, Ethylenglykol, Propylenglykol- (1,3) oder—(1,2), Trimethylolpropan, 4,4'-Dihydroxydiphenylpropan, Anilin, Ammoniak, Ethanolamin, Ethylendiamin hergestellt. Auch Sucrosepolyether, wie sie z.B. in den deutschen Auslegeschriften 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol, Acrylnitril in Gegenwart von Polyethern entstehen (amerikanische Patentschriften 3 383 351, 3 304 273, 3 523 093, 3 110 695, deutsche Patentschrift 1 152 536), sind ebenfalls geeignet, ebenso OH-Gruppen aufweisende Polybutadiene.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester, Polythioetheresteramide.

Die für die Copfropfpolymerisation eingesetzten aliphatischen oder gemischt aliphatisch-aromatischen Polyester werden in an und für sich bekannter Weise durch Veresterungs- oder Umesterungsreaktion von Gemischen aus aliphatischen oder aromatischen Dicarbonsäuren, ihren Anhydriden oder Estern und aliphatischen Dialkoholen hergestellt, vergl. Ullmanns Enzyklopädie der technischen Chemie, 14. Band, Urban und Schwarzenberg, München, 1963, S. 80 ff.

Als Dicarbonsäuren werden vorzugsweise eingesetzt Adipinsäure, Sebacinsäure, Terephthalsäure, Phthalsäure, Isophthalsäure, Maleinsäure, Fumarsäure, Itaconsäure; als mehrwertige Alkohole werden vorzugsweise eingesetzt Ethylenglykol, Propandiol-1,2 und -1,3, Butandiol-1,3 und -1,4, Hexandiol-1,6, 2,2-Dimethylpropandiol-1,3 und Polyethylen- und Polypropylenglykole oder mehrwertige aliphatische Alkohole, die 2—7 Etheratome im Molekül enthalten (vgl. DE-AS 10 54 620).

Für verzweigte Polyester werden höherfunktionelle Carbonsäuren oder Alkohole eingesetzt,

erwähnt seien Glycerin, 1,1,1-Trimethylolpropan, Hexantriol und Pentaerythrit, (vgl. z.B. DE-PS 1 105 160 und DE-AS 1 029 147). Die Molekulargewichte der Polyester liegen im allgemeinen zwischen 800 und 10 000, können aber auch wesentlich höher sein, die OH-Zahlen zwischen 0,1 und 80. Die Restwassergehalte der Polyester liegen im allgemeinen unter 0,1%. Falls gewünscht, können auch spezielle hochmolekulare Polyester mit z.B. enger Molekulargewichtsverteilung eingesetzt werden, die durch Polymerisation von Lactonen, wie z.B. $\beta$-Propiolacton, $\gamma$-Butyrolacton oder $\varepsilon$-Caprolacton erhalten werden, oder deren Synthese durch Copolymerisation von Epoxiden mit cyclischen Anhydriden erfolgte, vgl. K. Hamann, Makrom. Chem. 51 (1962) 53 und R. F. Fischer, J. Poly. Sci. 44 (1960) 155.

Geeignete Polyester im Sinne der Erfindung sind auch Polycarbonate oder Mischesterpolycarbonate, die durch Umesterungsreaktion mit z.B. Diphenylcarbonat erhalten werden können, beispielhaft seien aufgeführt Butylenglykolpolycarbonat, Hexandiol-1,6-polycarbonat. Entsprechende reinaliphatische Polycarbonate sind auch durch ringöffnende Polymerisation von z.B. Glykolcarbonat oder durch Copolymerisation von Epoxiden mit Kohlendioxid erhältlich.

Die OH-Funktionen der eingesetzten Polyether oder Polyester können vor, während oder nach der Herstellung der Copfropfpolymerisatdispersionen acyliert oder durch Umsetzung mit Mono-, Di- oder Polyisocyanaten urethanisiert werden. Die Acylierung kann mit Carbonsäuren, Carbonsäurehalogeniden oder Carbonsäureanhydriden erfolgen. Selbstverständlich ist auch eine Umesterung mit Carbonsäureestern oder Carbonaten möglich. Bevorzugt wird die Acylierung mit Acetanhydrid durchgeführt. Die Urethanisierung kann prinzipiell mit den in der Technik bekannten Isocyanaten durchgeführt werden. Bevorzugte Isocyanate sind Phenylisocyanat, Cyclohexylisocyanat, Alkylisocyanate wie Methyl-, Ethyl-, Propyl-, isopropyl oder Butylisocyanat, Methoximethylisocyanat, 1,4-Toluylendiisocyanat, 1,2-Toluylendiisocyanat, Hexamethylendiisocyanat, Isophorondiisocyanat.

Als Vinylmonomere seien beispielhaft aufgeführt: Olefine wie Ethylen, Propylen, Isobutylen, Vinylester aliphatischer oder aromatischer Carbonsäuren, vorzugsweise Vinylacetate, Vinylpropionat, $\beta$-ungesättigte Mono- oder Dicarbonsäuren und ihre Derivate, erwähnt seien (Meth) acrylsäure, Methyl(meth)acrylat, Ethyl(meth)acrylat, Propyl- bzw. isopropyl(meth)acrylat, n-Butyl-, iso- oder tert.-Butyl(meth)acrylat, 2-Ethylhexyl(meth)acrylat, (Meth)-Acrylamid, N-Alkyl-substituierte (Meth)-acrylamidderivate, (Meth)Acrylnitril, Maleinsäureanhydrid, Maleinsäureamid, N-Alkyl-Maleinimide, Maleinsäure-halb- oderdiester, Vinylaromaten wie Styrol, $\alpha$-Methylstyrol, 4-Chlorstyrol, vinylchlorid, Vinylidenchlorid, Vinylidenfluorid, Tetrafluoethylen, Vinylether wie Ethylvinylether oder n-Butylvinylether; aus der Reihe der Allylverbindungen seien angeführt Allylalkohol, Allylacetat, 2-Methylenpropan-1,3-dioldiazetat, 2-Methylenpropandiol-1,3, Allylethylcarbonat, Allylphenylcarbonat. Falls die Vernetzung oder Erhöhung der Molekulargewichte der Vinylharzphase gewünscht wird, können Divinylverbindungen oder Diallylverbindungen eingesetzt werden. Erwähnt seien Divinyl-benzol, (Meth)Acrylsäureester mehrwertiger Alkohole wie z.B. Ethylenglykoldimethacrylat, Diethylenglykoldiacrylat und Divinylether.

Die radikalische Polymerisation der Vinylmonomeren kann in an und für sich bekannter Weise mit Hilfe von Radikalbildern, UV-Strahlen, $\alpha$-, ß- oder $\gamma$-Strahlen oder thermisch ohne weitere Zusätze gestartet werden. Die strahlungsinitiierte Polymerisation wird vorzugsweise in Gegenwart von Sensibilisatoren durchgeführt, vgl. z.B. A. D. Jenkins, A. Ledwith, Reactivity, Mechanism and Structure in Polymer Chemistry, John Wiley and Son, London, New York, 1974, S. 465.

Um die radikalische Polymerisation der Vinylmonomeren zu starten, werden Radikalbildner in Mengen zwischen 0,001 bis 2, vorzugsweise 0,02 bis 0,8 Gew.-% bezogen auf die Gesamtmischung aus Organopolysiloxan, Polyester und Vinylmonomere eingesetzt. Als Radikalbildner seien beispielhaft aufgeführt Azo-Initiatoren wie Azo-bis-iso-buttersäurenitril (AIBN), Azoester, Azo-Iminoester oder Azo-N-Alkylamide, Peroxide wie di-tert. Butylperoxid, Di-cumylperoxid. Di-Benzoylperoxid, Perester wie Amylperpivalat tert. Butylperpivalat, tert. Butylperoctoat, t-Butylperbenzoat, tert. Butylperneodecanoat, Percarbonate wie Cyclohexylpercarbonat oder Bisisopropylpercarbonat oder Hydroperoxide wie z.B. Cumylhydroperoxid, tert. Butylhydroperoxid.

Geeignete Initiatoren sind ferner Benzpinakol, Benzpinakolderivate oder andere thermisch labile hochsubstituierte Ethanderivate.

Die Polymerisation kann ferner mit Hilfe von Redoxsystemen bei tieferen Temperaturen als den rein thermischen Zerfalltemperaturen der Radikalbildner entspricht, gestartet werden.

Als Redox-Initiatoren seien beispielhaft erwähnt Kombinationen aus Peroxiden und Aminen, wie z.B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen und Schwefeldioxid/Peroxid-Redoxsysteme.

Die Polymerisationsreaktion kann kontinuierlich oder diskontinuierlich, drucklos oder bei Reaktionsdrucken bis z.B. 300 bar, vorzugsweise bis 15 bar, bei Reaktionstemperaturen zwischen –20°C und +250°C, vorzugsweise 70 bis 190°C, durchgeführt werden. Falls gewünscht, kann die Polymerisation auch in Gegenwart von Lösungsmitteln oder Verdünnungsmitteln durchgeführt werden, genannt seien Wasser, Alkohole, wie Methanol, Ethanol, tert.-Butanol, aliphatische oder aromatische Kohlenwasserstoffe, Halogen-Kohlenwasserstoffe wie Chlorbenzol oder fluorierte Verbindungen, Ether wie Dioxan oder Tetrahydrofuran, Ester wie z.B. Essigsäureethylester.

Vorzugsweise wird die Polymerisation aber lösungsmittelfrei durchgeführt.

Falls gewünscht, kann die Polymerisationsreaktion in Gegenwart von Molekulargewichtsreglern durchgeführt werden. Als Regler seien aufgeführt Mercaptane wie n- oder tert.-Dodecylmercaptan, Thioglykol, Thioglycerin oder Thioessigsäureester. Ferner schwefelfreie Molekulargewichtsregler wie Kohlenwasserstoffe, beispielhaft seien genannt Paraffinfraktionen wie z.B. Petrolether, Leicht- oder Waschbenzin, $\alpha$-Olefine wie z.B. Propylen, Isobutylen, Buten-1, ferner Ketone wie z.B. Aceton, Methylethylketon oder Cyclohexanon, ferner Aldehyde wie z.B. Formaldehyd, Acetaldehyd, Propionaldehyd, Isobutyraldehyd oder Allylverbindungen wie z.B. Allylalkohol, Allylacetat, 2-Methylenpropan-1,3-dioldiazetat oder Allylcarbonate. Als Telogene kommen ferner in Frage Halogenkohlenwasserstoffe wie Methylenchlorid, Tetrachlorethan, Dibromethan usw. Wie zu erwarten, lassen sich mit Hilfe derartiger Regler die Viskositäten der Dispersionen steuern.

Die Umsetzung der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so daß mindestens 80% der eingesetzten Monomeren, vorzugsweise aber mehr als 90% umgesetzt werden. Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1 000 ppm, vorzugsweise unter 100 ppm.

Falls gewünscht, können nach beendeter Polymerisation in den Ansatz Antioxidantien, Stabilisatoren, UV-Absorber, Alterungsschutzmittel, Weichmacher, fungistatisch und bakteriostatisch wirkende Substanzen eingetragen werden.

Ferner können die üblicherweise bei der Herstellung von Silikon-Elastomeren verwendeten Füllstoffe eingesetzt werden. Derartige Füllstoffe sind Kieselsäuren, die nach verschiedenen Verfahren hergestellt wurden und unterschiedliche spezifische Oberflächen aufweisen.

Die erfindungsgemäß erhaltenen Silicon-Polyether-Vinylpolymer-Dispersionen sind besonders für die Verwendung in bei Raumtemperatur härtenden 1- und 2 Komponentenmassen geeignet. Solche Massen, die nach dem Kondensationsprinzip aushärten, bestehen bekanntlich aus hydroxylendblockierten Polydiorganosiloxanen, Vernetzern, Füllstoffen und Katalysatoren.

Die hydroxylendblockierten Polydiorganosiloxane können ganz oder teilweise durch die erfindungsgemäßen Copfropfpolymerisatdispersionen ersetzt werden. Als Vernetzer werden Silane mit mindestens 3 hydrolytisch leicht abspaltbaren Gruppen im Molekül wie der Carbonsäure-rest, Carbonsäureamid-rest, Oxim-rest, Aminoxid-rest und Amin-rest eingesetzt. Verstärkende Füllstoffe sind z.B. pyrogen erzeugtes Siliciumdioxid, als nicht verstärkender Füllstoff kommt z.B. Kreide in Frage. Als Katalysatoren verwendet man u.a. organische Zinnverbindungen wie Dibutylzinndilaurat.

Siliconmassen, in denen die erfindungsgemäßen Copfropfpolymerisat-Dispersionen verwendet werden, zeigen im Vergleich mit den bisher bekannten Siliconmassen eine wesentlich verbesserte Überstreichbarkeit mit handelsüblichen Lacken, die z.B. auf Alkydharz- oder Polyurethanbasis beruhen. Die bei Raumtemperatur ausgehärteten Siliconmassen, in denen die erfindungsgemäßen Copfropfpolymerisate als aufbauende Bestandteile enthalten sind, können wie Holz lackiert werden. Ferner werden bei diesen neuartigen Systemen ausgezeichnete Haftung, auch bei Nässe, auf Holz, Metallen und Beton festgestellt.

Die folgenden Beispiele erläutern die Herstellung der erfindungsgemäßen Silicon-Polyether-Vinylpolymerdispersionen.

Wenn nichts anderes vermerkt, sind Mengenangaben als Gewichtsteile bzw. Gewichtsprozente zu verstehen.

Herstellung der Ausgangssubstanzen

Die Herstellung der OH-funktionellen Polysiloxane erfolgt in an sich bekannter Weise (vgl. W. Noll, Chemie und Technologie der Silikone, Verlag Chemie GmbH., Weinheim/Bergstr., 2. Auflage, 1968, Kap. 5, S. 162 ff).

Die in den Beispielen aufgeführten OH-funktionellen Polydimethylsiloxane sind wie folgt gekennzeichnet:

| OH-Polysiloxan-Nr. | Viskosität mPas bei 20°C |
|---|---|
| 1 | 5 000 |
| 2 | 10 000 |
| 3 | 18 000 |
| 4 | 50 000 |

Die Herstellung der Polyester erfolgt durch Schmelzkondensation unter Abdestillation des gebildeten Reaktionswassers bis zum Erreichen der gewünschten OH-bzw. Säurezahlen, (vgl. Houben-Weyl, Methoden der Organischen Chemie, Bd. XIV/2, Georg Thieme-Verlag, Stuttgart, 1963, S. 1 ff). In der Tabelle 1 sind die wichtigsten Kenndaten der verwendeten Polyether zusammengefaßt:

TABELLE 1

| Polyether | Zusammensetzung | Kenndaten |
|---|---|---|
| A | Polyethylenglykol | Fp: 58—60°C<br>OH-Zahl:ca.5 |
| B | Trifunktioneller Mischpolyether aus Propylen-und Ethylenoxid | Viskosität<br>520 mPas<br>OH-Zahl: 49 |
| C | Trifunktioneller Polyether enthaltend Propylenoxid- und Polyethylenoxidblöcke | Viskosität<br>1100 mPas<br>OH-Zahl: 28 |

TABELLE 2

| Bezeichnung des Polyesters | Zusammensetzung des Polyesters | OH-Zahl | Säure-Zahl |
|---|---|---|---|
| A | Adipinsäure-Diethylenglykol | 40 | 1 |
| B | Adipinsäure, Ethylenglykol, Butandiol-1,4 | 55 | 1 |
| C | Hexandiolpolycarbonat | 58 | 0,1 |
| D | Phthalsäure, Isophthalsäure, Ethylenglykol, Neopentylglykol | 120 | 18 |
| E | wie B | 19,5 | 1 |
| F | Phthalsäure, Maleinsäure, Propandiol-1,2 Dipropylenglykol | 34 | 20 |

Beispiel 1

Unter Stickstoff werden in einem 2 1-Rührkessel 300 g Polysiloxan 1,50 g Polyether A und 150 g Polyether B auf 110°C erwärmt. Dann wird innerhalb von 2 Std. eine Lösung von 100 g Polysiloxan 1, 200 g Vinylacetat und 1,125 g tert. Butylperpivalat hinzugegeben. Dann wird 1 Std. nachgerührt. Die flüchtigen Anteile werden im Vakuum bei 110°C—130°C agbezogen. Man erhält eine homogene, feinteilige Pfropfdispersion mit einer Viskosität von 58 000 mPas und der folgenden Zusammensetzung: 51,6 Gew.% Polysiloxan, 25,9 Gew.% Polyether und 22,5 Gew,% polymerisierten Einheiten aus Vinylacetat.

Die nach dem hier beschriebenen Verfahren hergestellten Massen wurden mit Hilfe von Vernetzern und die Vernetzung fördernden Katalysatoren nach folgender Rezeptur abgemischt und unter dem Einfluß von Luftfeuchtigkeit ausgehärtet:

200 g Copfropfpolymerisat
10,4 g eines Titankomplexes der folgenden ungefähren Zusammensetzung:

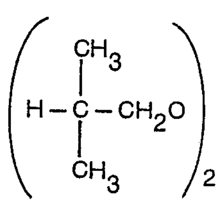

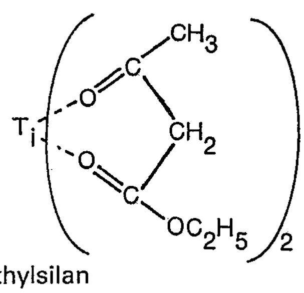

11,4 g Bis-(N-methylbenzamido)-ethoxymethylsilan
2,2 g Dibutylzinndiacetat

Die vernetzten Produkte sind elastisch und klebfrei. Sie wurden mit einem handelsüblichen Alkydal-Lack angestrichen, dessen Haftung auf dem Silicon nach 7 Tagen mit Hilfe des Gitterschnitt-Tests ermittelt wurde, indem man auf der lackierten Oberfläche ein Quadrat von 2,54 cm mit einer Rasierklinge in 100 gleich große quadratische Stücke zerschneidet, so daß man eine bemalte Oberfläche mit gitterförmigen Aussehen erhält. Auf dieses Gitter wird dann ein Klebstreifen (Tesafilm Nr. 101 der Fa. Beiersdorf AG, Hamburg) fest aufgepreßt. Der Klebstreifen wird hierauf entfernt, indem man ihn unter einen Winkel von etwa 30°C langsam abzieht. Der prozentuale Wert für die Retention des Lackes ergibt sich aus der Anzahl der bemalten quadratischen Stücke, die nach dem Entfernen des Klebstreifens auf der gehärteten Zubereitung verblieben. Die Physikalischen Eigenschaften sowie die Ergebnisse des Gitterschnitt-Tests gehen aus der folgenden Tabelle hervor. Für die Vergleichsbeispiele 2 und 3 wurden hydroxylendblockierte Polydimethylsiloxane mit einer Viskosität von 5 Pas im Beispiel 2 und 50 Pas im Beispiel 3 anstelle der Copfropfpolymerisatdispersion eingesetzt.

| Beispiel-Nr. | Lackverlauf | Lackhaftung % | E-Modul (100% Deh- $N/mm^2$ | Reißfe- stigkeit $N/mm^2$ | Bruchdehnung % |
|---|---|---|---|---|---|
| 1 | gut | 92,5 | 0,192 | 0,534 | 483 |
| 2 (Vergleich) | schlecht | 0 | 0,141 | 0,299 | 295 |
| 3 (Vergleich) | schlecht | 18 | 0,097 | 0,313 | 544 |

Beispiel 4

In einem 6 1-Rührkessel werden 1600 g Polysiloxan 1, 1000 g Polyether B unter Stickstoff auf 110°C erwärmt. Bei dieser Innentemperatur wird innerhalb von 2 Std. eine Lösung von 6 g Azobisisobuttersäurediethylester in 100 g Vinylacetat hinzugegeben. Anschließend wird 1 Std. bei 110°C nachgerührt. Flüchtige Anteile werden im Vakuum bei 110°—130°C abgezogen. Man erhält eine homogene Dispersion mit der folgenden Zusammensetzung: 45,5 Gew.% Polysiloxan, 28,4 Gew.% Polyether und 26,1 Gew.% polymerisierten Einheiten aus Vinylacetat und der Viskosität von 45 000 mPas.

Nach dem im Beispiel 1 beschriebenen Verfahren wird die Copfropfdispersion vernetzt und die Lackhaftung geprüft. Ergebnis: Lackhaftung 100% und Lackverlauf gut.

Beispiel 5

In einem 6 1-Rührkessel werden unter Stickstoff 1600 g Polysiloxan 1, 1000 g Polyether B auf 110°C erwärmt. Bei einer Innentemperatur von 110°C wird eine Lösung aus 1000 g Vinylacetat, 400 g Polysiloxan 1, 6,0 g tert. Butylperpivalat und 3,0 g tert. Dodecylmercaptan innerhalb von 2 Std. hinzugetropft. Der Ansatz wird 2 Std. bei 110°C nachgerührt. Die flüchtigen Anteile werden im Vakuum bei 110°C—130°C abdestilliert. Die erhaltene Pfropfdispersion hat eine Viskosität von 48 000 mPas und folgende Zusammensetzung: 53,4 Gew.% Polysiloxan, 26,7 Gew.% Polyether und 19,9 Gew.% polymerisierte Einheiten aus Vinylacetat. Nach der in Beispiel 1 angegebenen Arbeitsweise wird ein Teil der Copfropfdispersion vernetzt. Eine Probelackierung ergab einen guten Lackverlauf. Die Probe besaß folgende mechanische Kennwerte:

| | |
|---|---|
| E-Modul (100% Dehnung): | 0,165 $N/mm^2$ |
| Reißfestigkeit: | 0,461 $n/mm^2$ |
| Bruchdehnung: | 509% |

Beispiel 6—7

A. Herstellung eines Pfropfdispergators: 400 g Polysiloxan 1, 400 g Polyether B und 50 g Cyclohexylisocyanat werden unter Rühren 4 Std. auf 200°C erwärmt. Nach dem Abkühlen wird das Reaktionsprodukt zur Herstellung der Pfropfdispersion des Beispiels 7 eingesetzt.

B. Herstellung der Copfropfdispersionen:

Ein 2 1-Rührkessel wird mit der Vorlage beschickt und unter Stickstoff auf 110°C aufgeheizt. Dann wird eine Lösung 1 innerhalb von 2 Std. hinzugegeben und anschließend 1 Std. bei 110°C nachgerührt. Restmonomere werden im Vakuum bei 110—130°C abdestilliert.

| Beispiel | Polysiloxan 1 | Polyether B | Pfropfdispergator | Lösung 1 Vinylacetat | Polysiloxan | Azobisisobuttersäurediethylester |
|---|---|---|---|---|---|---|
| 6 | 400 | 200 | — | 250 | 100 | 1,5 |
| 7 | 400 | 200 | 150 | 250 | 100 | 1,5 |

| | | Zusammensetzung in Gew.-% | | | |
|---|---|---|---|---|---|
| Beispiel | Viskosität mPas | Polysiloxan | Polyether | Pfropf-dispergator | Polymerisierte Einheiten aus Vinylacetat |
| 6 | 34 300 | 54,2 | 21,6 | — | 24,2 |
| 7 | 28 300 | 46,9 | 18,8 | 14,1 | 20,2 |

Nach dem im Beispiel 1 beschriebenen Verfahren wurden die Copfropfpolymerisatdispersionen vernetzt. Ein Probestück wurde mit Alkyd-Lack überstrichen und zeigte keine Störungen im Lackverlauf (Verlauf "Gut").

Die vernetzten Proben hatten folgende mechanische Festigkeitswerte:

| Beispiel | E-Modul 100% Dehnung $N/mm^2$ | Reißfestigkeit $N/mm^2$ | Bruchdehnung % |
|---|---|---|---|
| 6 | 0,109 | 0,199 | 309 |
| 7 | 0,092 | 0,261 | 476 |

Beispiel 8

In einem 2 1-Rührkessel werden 200 g Polysiloxan 1 auf auf 150°C unter Stickstoffüberleitung erhitzt. Dann werden gleichzeitig 2 Lösungen innerhalb von 2 Std. hinzugegeben:

Lösung 1: 200 g Polyether B, 100 g Styrol, 100 g n-Butylacrylat
Lösung 2: 200 g Polysiloxan 1, 2,0 g tert. Butylperoctoat

Anschließend wird 1 Std. bei 150°C nachgerührt. Die flüchtigen Anteile werden im Vakuum bei 150°C—130°C abgezogen. Man erhält eine Dispersion mit einer Viskosität von 30 300 mPas und der folgenden Zusammensetzung:

51,1 Gew.% Polysiloxan, 25,6 Gew.% Polyether
11,6 Gew.% polymerisierte Einheiten aus Styrol und
11,7 Gew.% polymerisierte Einheiten aus n-Butylacrylat.

Ein Teil der Copfropfdispersion wurde nach der Vorschrift aus Beispiel 1 vernetzt und nach der vollständigen Aushärtung lackiert. Der Lackverlauf war gut.

Beispiel 9—10

In einem 6 1-Rührkessel wurde die Vorlage eingefüllt und unter Stickstoff auf 110°C erwärmt. Eine Lösung wurde innerhalb von 2 Std. hinzugegeben und 1 Std. bei 110°C nachgerührt. Die Restmonomeren wurden im Vakuum bei 110—120°C abgezogen.

| | Vorlage | | | Lösung | | |
|---|---|---|---|---|---|---|
| Beispiel | Polysiloxan 1 | Polyether C | Acetanhydrid | Vinylacetat | Polysiloxan 1 | tert.-Butylperpivalat |
| 9 | 1600 | 1000 | — | 1000 | 400 | 8,0 |
| 10 | 1600 | 1000 | 75 | 1000 | 400 | 8,0 |

| | | Zusammensetzung in Gew.-% | | | |
|---|---|---|---|---|---|
| Beispiel | Viskosität mPas | Polysiloxan | Polyether | Polyether acetyliert | Polyvinylacetat |
| 9 | 50 500 | 52,2 | 26,1 | — | 21,7 |
| 10 | 44 400 | 52,1 | — | 27,0 | 20,9 |

Ein Teil der Copfropfdispersionen wurde nach der Vorschrift des Beispiels 1 vernetzt und nach der vollständigen Aushärtung lackiert. Der Lackverlauf war in beiden Fällen gut.

**Patentansprüche**

1. Bei Raumtemperatur härtbare, stabile Copfropfpolymerisatdispersionen, erhältlich durch Pfropfpolymerisation von Vinylmonomeren in Gegenwart von Mischungen aus Erst- und Zweitpolymeren, wobei als Erstpolymer OH-funktionelle Diorganopolysiloxane der Formel

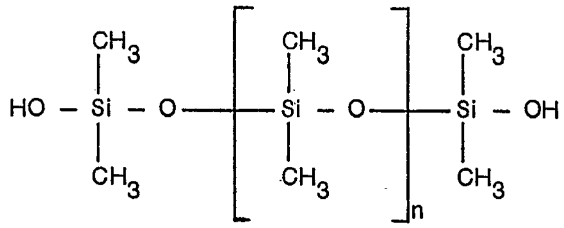

n = 10 bis 5000

wobei die Methylgruppen bis zu 30 Mol-% durch Ethyl-, Vinyl- oder Phenylgruppen ersetzt sein können und

als Zweitpolymere gegebenenfalls durch Vinylpolymerisate modifizierte, aliphatische Polyether oder Polythioether mit 2—8 OH-Gruppen pro Molekül, wobei die Polyether vor, während oder nach der Polymerisation acryliert oder durch Umsetzung mit Mono- oder Polyisocyanaten urethanisiert werden könne, eingesetzt werden und wobei Copfropfpolymerisatdispersionen erhalten werden, die über Vinylpolymerisatbrücken verknüpfte Pfropfpolymere aus Erst- und Zweitpolymeren enthalten und die aus

I. 10—90 Gew.-% endständig OH-funktionellen Organopolysiloxanen,
II. 5—85 Gew.-%, gegebenenfalls acylierte oder durch Umsetzung mit Mono- oder Polyisocyanaten urethanisierte Polyether und
III. 5—85 Gew.-% polymerisierten Einheiten aus Vinylverbindungen bestehen und
wobei die Summe der Komponenten I—III stets 100% beträgt.

2. Copfropfpolymerisatdispersionen, gemäß Anspruch 1, dadurch gekennzeichnet, daß die Komponente III aus

5—85 Gew.-% polymerisierten Einheiten von Vinylestern, $\alpha,\beta$-ungesättigten Carbonsäuren, Derivaten $\alpha$-$\beta$-ungesättigter Mono- oder Dicarbonsäuren, Vinylaromaten, $\alpha$-Olefinen, Vinylethern, halogenierten Vinylmonomeren, Allylverbindungen, Divinylverbindungen oder (Meth)Acrylsäureestern mehrwertiger Alkohole, oder Gemischen dieser Monomeren besteht.

3. Copfropfpolymerisatdispersionen gemäß Anspruch 1, dadurch gekennzeichnet, daß die Komponente III aus

0—85 Gew.-% polymerisierten Einheiten aus Vinylacetat und
5—85 Gew.-% polymerisierten Einheiten aus (Meth)Acrylsäurealkylestern mit 1—8 C-Atomen in der Esteralkylkomponente, (Meth)Acrylsäureamid, N-Alkylsubstituierte (Meth)Acrylsäureamide, (Meth)Acrylnitril sowie ihren Gemischen, jeweils auf die gesamte Dispersion gerechnet, besteht.

4. Copfropfpolymerisatdispersionen, gemäß Anspruch 1, dadurch gekennzeichnet, daß die Komponente I
30—80 Gew.-% und
die Komponente II
10—60 Gew.-% ausmachen und
daß die Komponente III aus
10—60 Gew.-% polymerisierten Einheiten aus

a) 5—90 Gew.-% Styrol
b) 10—95 Gew.-% (Meth)Acrylsäurealkylestern mit 1—8 C-Atomen in der Esteralkylkomponente
c) 0—85 Gew.-% (Meth)Acrylnitril, besteht,

wobei die Summe der Komponenten a)—c) stets 100% beträgt.

5. Copfropfpolymerisatdispersionen gemäß Anspruch 1, dadurch gekennzeichnet, daß die Komponente III aus

10—60 Gew.-% polymerisierten Einheiten aus Vinylacetat besteht.

6. Copfropfpolymerisatdispersionen gemäß Anspruch 1, dadurch gekennzeichnet, daß die Komponente I aus

5—60 Gew.-% endständig OH-funktionellen Organopolysiloxanen und
0—30 Gew.-% Organopolysiloxanen mit Trimethylsilylendgruppen und

die Komponente III aus

5—60 Gew.-% polymerisierten Einheiten aus Vinylmonomeren bestehen.

7. Verfahren zur Herstellung von Copfropfpolymerisatdispersion gemäß einem der Ansprüche 1 bis 6, dadurch gekennzeichnet, daß Mischungen aus

a) 8—90 Gew.-% endständig OH-funktionellen Organopolysiloxanen
b) 0—40 Gew.-% methyl-endgestoppten Organopolysiloxanen
c) 4,999—85 Gew.-% aliphatischen Polyethern
d) 8—85 Gew.-% eines oder mehrerer Vinylmonomererer
e) 0,001—2 Gew.-% eines oder mehrerer Radikalbildner,

wobei die Summe der Komponenten a) bis c) stets 100% beträgt, bei Temperaturen bis 250°C einer Polymerisationsreaktion unterzogen werden.

8. Bei Raumtemperatur vernetzbare Organopolysiloxanmassen, die Copfropfpolymerisatdispersionen gemäß einem der Ansprüche 1 bis 6 und zusätzlich Vernetzer, Härtungskatalysatoren, Füllstoffe und gegebenenfalls weitere Zuschlagstoffe enthalten.

9. Verwendung von bei Raumtemperatur vernetzbaren Organopolysiloxanmassen, die Copfropfpolymerisatdispersionen gemäß einem der Ansprüche 1 bis 6 enthalten, als Ein- oder Zweikomponentensysteme für Dichtungsmassen.

**Claims**

1. Stable co-grafted polymer dispersions which can be cured at room temperature and are obtainable by graft polymerisation of vinyl monomers in the presence of mixtures of first and second polymers, wherein diorganopolysiloxanes with OH functional groups, of the formula

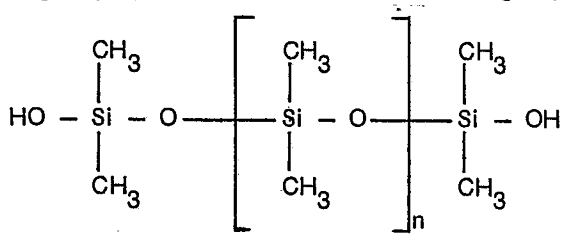

n = 10 to 5,000

it being possible for up to 30 mol% of the methyl groups to be replaced by ethyl, vinyl or phenyl groups, are used as the first polymer, and aliphatic polyethers or polythioethers which have 2—8 OH groups per molecule and are optionally modified by vinyl polymers, it being possible for the polyethers to be acrylated before, during or after the polymerisation or to be urethanised by reaction with mono- or polyisocyanates, are used as the second polymers, and wherein co-grafted polymer dispersions are obtained which contain graft polymers of first and second polymers linked via vinyl polymer bridges and which consist of

I. 10—90% by weight of organopolysiloxanes with terminal OH functional groups,
II. 5—85% by weight of polyethers which are optionally acylated or urethanised by reaction with mono- or polyisocyanates and
III. 5—85% by weight of polymerised units of vinyl compounds and

wherein the sum of components I—III is always 100%.

2. Co-grafted polymer dispersions, according to Claim 1, characterised in that component III consists of

5—85% by weight of polymerised units of vinyl esters, $\alpha$-$\beta$-unsaturated carboxylic acids, derivatives of $\alpha$-$\beta$-unsaturated mono- or di-carboxylic acids, vinyl-aromatic compounds, $\alpha$-olefines, vinyl ethers, halogenated vinyl monomers, allyl compounds, divinyl compounds or (meth)acrylic acid esters of polyhydric alcohols, or mixtures of these monomers.

3. Co-grafted polymer dispersions according to Claim 1, characterised in that component III consist of

0—85% by weight of polymerised units of vinyl acetate and

5—85% by weight of polymerised units of alkyl (meth)acrylates with 1—8 C atoms in the alkyl component, (meth)acrylamide, N-alkyl-substituted (meth)acrylamides or (meth)acrylonitrile or mixtures thereof, based in each case on the total dispersion.

4. Co-grafted polymer dispersions, according to Claim 1, characterised in that component I constitutes 30—80% by weight and component II constitutes 10—60% by weight and in that component III consists of 10—60% by weight of polymerised units of

a) 5—90% by weight of styrene,
b) 10—95% by weight of alkyl (meth)acrylates with 1—8 C atoms in the alkyl component, and
c) 0—85% by weight of (meth)acrylonitrile,

the sum of components a)—c) always being 100%.

5. Co-grafted polymer dispersions according to Claim 1, characterised in that component III consists of 10—60% by weight of polymerised units of vinyl acetate.

6. Co-grafted polymer dispersions according to Claim 1, characterised in that component I consists of

5—60% by weight of organopolysiloxanes with terminal OH functional groups and
0—30% by weight of organopolysiloxanes with trimethylsilyl end groups and

component III consists of

5—60% by weight of polymerised units of vinyl monomers.

7. Process for the preparation of co-grafted polymers dispersion according to one of Claims 1 to 6, characterised in that mixtures of

a) 8—90% by weight of organopolysiloxanes with terminal OH functional groups,
b) 0—40% by weight of organopolysiloxanes with methyl end groups,
c) 4.999—85% by weight of aliphatic polyethers,
d) 8—85% by weight of one or more vinyl monomers and
e) 0.001—2% by weight of one or more radical-forming agents,

the sum of components a) to c) always being 100%, are subjected to a polymerisation reaction at temperatures of up to 250°C.

8. Organopolysiloxane compositions which can be crosslinked at room temperature and which contain co-grafted polymer dispersions according to one of Claims 1 to 6 and, in addition, cross-linking agents, curing catalysts, fillers and, if appropriate, other additives.

9. Use of organopolysiloxane compositions which can be cross-linked at room temperature and which contain co-grafted polymer dispersions according to one of Claims 1 to 6, as one- or two-component systems for sealing compositions.

**Revendications**

1. Dispersions de copolymères greffés stables et durcissables à la température ambiante que l'on obtient par polymérisation greffée de monomères vinyliques en présence de mélanges de premiers et de deuxièmes polymères en utilisant, comme premiers polymères, des diorganopolysiloxanes à fonction OH de formule:

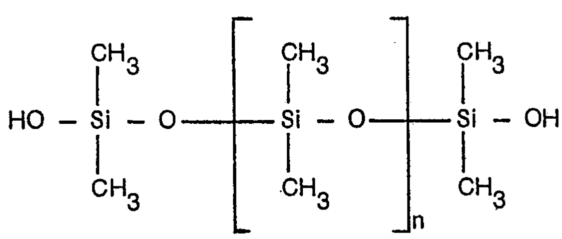

n = 10 à 5.000

les groupes méthyle pouvant être remplacés jusqu'à 30% molaires par des groupes éthyle, vinyle ou phényle, et comme deuxièmes polymères, des polythioéthers ou des polyéthers aliphatiques contenant 2 à 8 groupes OH par molécule et éventuellement modifiés par des polymères vinyliques, les polyéthers pouvant être acrylés avant, pendant ou après la polymérisation ou uréthanisés par réaction avec des mono- ou des polyisocyanates, pour obtenir des dispersions de copolymères greffés qui contiennent

des polymères greffés des premiers et des deuxièmes polymères reliés par des ponts de polymère vinylique et qui sont constituées de:

I. 10—90% en poids d'organopolysiloxanes à fonction OH terminale,
II. 5—85% en poids de polyéthers éventuellement acylés ou uréthanisés par réaction avec des mono- ou des polyisocyanates, et
III. 5—85% en poids de motifs polymérisés de composés vinyliques,

la somme des composants I—III étant constamment de 100%.

2. Dispersions de copolymères greffés suivant la revendication 1, caractérisées en ce que le composant III est constitué de

5—85% en poids de motifs polymérisés d'esters vinyliques, d'acides carboxyliques $\alpha,\beta$-insaturés, de dérivés d'acides mono- ou dicarboxyliques $\alpha,\beta$-insaturés, d'hydrocarbures aromatiques vinyliques, d'$\alpha$-oléfines, d'éthers vinyliques, de monomères vinyliques halogénés, de composés allyliques, de composés divinyliques ou d'esters d'acide (méth)acrylique d'alcools polyvalents, ou de mélanges de ces monomères.

3. Dispersions de copolymères greffés suivant la revendication 1, caractérisées en ce que le composant III est constitué de

0—85% en poids de motifs polymérisés d'acétate de vinyle, et
5—85% en poids de motifs polymérisés d'esters alkyliques d'acide (méth)acrylique contenant 1 à 8 atomes de carbone dans le composant alkyle d'ester, d'amide d'acide (méth)acrylique, d'amides d'acide (méth)acrylique substitués par un groupe N-alkyle, de (méth)acrylonitrile, ainsi que de leurs mélanges, calculé chaque fois sur toute la dispersion.

4. Dispersions de copolymères greffés suivant la revendication 1, caractérisées en ce que le composant I représente
30—80% en poids, et
le composant II représente
10—60% en poids, tandis que
le composant III est constitué de
10—60% en poids de motifs polymérisés de

a) 5—90% en poids de styrène,
b) 10—95% en poids d'esters alkyliques d'acide (méth)acrylique contenant 1—8 atomes de carbone dans le composant alkyle d'ester,
c) 0—85% en poids de (méth)acrylonitrile, la somme des componsants a)—c) étant constamment de 100%.

5. Dispersions de copolymères greffés suivant la revendication 1, caractérisées en ce que le composant III est constitué de 10—60% en poids de motif polymérisés d'acétate de vinyle.

6. Dispersions de copolymères greffés suivant la revendication 1, caractérisées en ce que le composant I est constitué de 5—60% en poids d'organopolysiloxanes à fonction OH terminale,

0—30% en poids d'organopolysiloxanes comportant des groupes terminaux trimethylsilyle, tandis que le composant III est constitué de
5—60% en poids de motifs polymérisés de monomères vinyliques.

7. Procédé de préparation d'une dispersion d'un copolymère greffé suivant une des revendications 1 à 6, caractérisé en ce qu'on soumet, à une réaction de polymérisation à des températures allant jusqu'à 250°C, des mélanges de

a) 8—90% en poids d'organopolysiloxanes à fonction OH terminale,
b) 0—40% en poids d'organopolysiloxanes arrêtés en terminaison par des groupes méthyle,
c) 4,999—95% en poids de polyéthers aliphatiques,
d) 8—85% en poids d'un ou de plusieurs monomères vinyliques,
e) 0,001—2% en poids d'un ou de plusieurs formateurs de radicaux,

la somme des composants a) à c) étant constamment de 100%.

8. Masses d'organopolysiloxanes réticulables à la température ambiante contenant les dispersions de copolymères greffés suivant une des revendications 1 à 6 et, en outre, des agents de réticulation, des catalyseurs de durcissement, des charges et éventuellement d'autres additifs.

9. Utilisation de masses d'organopolysiloxanes réticulables à la température ambiante et contenant des dispersions de copolymères greffés suivant une des revendications 1 à 6, comme systèmes à un ou à deux composants pour matériaux d'étanchéité.